# EUROPEAN PATENT APPLICATION

(11) **EP 4 693 681 A1**
(43) Date of publication of application: **11.02.2026**
(21) Application number: 24862973.5
(22) Date of filing: 21.06.2024
(51) Int. Cl.: H01M 50/383, H01M 50/242, H01M 10/6551, H01M 50/204, B60L 50/64

(54) **BATTERY ASSEMBLY**

(30) Priority: 08.09.2023 KR 20230119490; 07.02.2024 KR 20240018905
(71) Applicant: SK On Co., Ltd., Seoul 03161 (KR)
(72) Inventor: LEE, Seung Hun, Daejeon 34124 (KR); SAGONG, Kang, Daejeon 34124 (KR); SEO, Ji Won, Daejeon 34124 (KR); SON, Sol San, Daejeon 34124 (KR); LEE, Seok Hwan, Daejeon 34124 (KR)
(74) Representative: Prüfer & Partner mbB Patentanwälte · Rechtsanwälte
(86) International application number: PCT/KR2024/008621
(87) International publication number: WO 2025/053390

(57) **Abstract**

A battery assembly according to the present disclosure may include a plurality of battery cells arranged in a stacked configuration; a first body forming a receiving space for receiving the plurality of battery cells; a second body positioned to face the first body and forming the receiving space together with the first body; and a support frame including a flow path extending in one direction and positioned between the plurality of battery cells and the second body.

## Description

### BACKGROUND OF THE INVENTION

### 1. Field

The embodiments of the present disclosure relate generally to a battery assembly. Specifically, the embodiments relate to a battery assembly for improving the stability of a battery assembly.

### 2. Description of the Related Art

A secondary battery converts electrical energy into chemical energy and stores it so that it can be reused multiple times through charging and discharging. The secondary battery is widely used in various industries due to its economical and eco-friendly characteristics. In particular, lithium secondary batteries are widely used across industries, including mobile devices that require high-density energy.

Secondary batteries can be manufactured as battery modules or battery packs by grouping a certain number of battery cells to achieve high capacity and high power output. For example, a battery module comprising a plurality of battery packs or a battery pack comprising a plurality of battery modules can be manufactured.

In addition, a cell to pack structure in which battery cells are manufactured into a battery pack is also emerging to reduce the weight of the battery pack and increase the energy density.

However, there is a possibility that a fire may occur due to high heat during the process of repeated charging and discharging of the secondary battery, and the fire may spread to adjacent cells, resulting in an explosion. To prevent this, research is being conducted on structures to prevent the spread of heat and flame to adjacent cells.

Also, when multiple secondary cells are grouped together, research is being conducted on a structure that can increase durability to protect the secondary cells from external pressure.

### SUMMARY OF THE INVENTION

A problem addressed by the embodiments of the present disclosure is to provide a battery assembly that improves stability by preventing the propagation of flame or gas to adjacent cells.

Another problem addressed by the embodiments is to provide a battery assembly that improves stability by protecting the battery cells received in the receiving space from external pressure or vibration.

Yet another problem addressed by the embodiments is to provide a battery assembly that can reduce weight and reduce manufacturing costs.

Furthermore, the battery assembly of the present disclosure can be widely used in electric vehicles, battery charging stations, and other green technology applications such as solar and wind power generation utilizing batteries. Furthermore, the embodiments of the present disclosure can be used in eco-friendly electric vehicles, hybrid vehicles, and the like to prevent climate change by curbing air pollution and greenhouse gas emissions.

A battery assembly according to an embodiment of the present disclosure may comprise a plurality of battery cells arranged in a stacked configuration; a first body forming a receiving space for receiving the plurality of the battery cells; a second body positioned to face the first body and forming the receiving space together with the first body; and a support frame including a flow path extending in one direction and positioned between the plurality of the battery cells and the second body.

In an embodiment, the support frame may include a bottom portion formed parallel to the first body, and an extension portion extending from both ends of the bottom portion toward the first body or the second body.

In an embodiment, the extension portion may be bent at one end and may be parallel to the first body or the second body.

In an embodiment, the extension portion may extend to form an incline with the bottom portion.

In an embodiment, the flow path may be formed in a channel shape.

In an embodiment, the support frame may further include a cushioning member positioned at one end of the extension portion.

In an embodiment, the extension portion may contact the second body.

In an embodiment, the bottom portion may further include a bottom hole in communication with the flow path.

In an embodiment, the battery assembly may further comprise side frames extending from both ends of the support frame toward the first body.

In an embodiment, one end of the side frames may be connected to the first body.

In an embodiment, the side frames may further include a side hole formed in through.

In an embodiment, a stacking direction in which the plurality of the battery cells are stacked may be perpendicular to a direction in which the flow path extends.

In an embodiment, the battery assembly may further comprise a module cover positioned inside the receiving space and receiving the plurality of the battery cells; wherein the support frame may be positioned between the module cover and the second body.

In an embodiment, the module cover may include a cover body covering the plurality of the battery cells and including a cover hole formed in through, and a side body extending from both ends of the cover body toward the first body.

In an embodiment, the side body may be coupled with the first body.

In an embodiment, the side body may be bent at one end and may be arranged parallel to the first body.

In an embodiment, the battery assembly may further comprise side frames extending from both ends of the support frame toward the first body, wherein the side frames may include a through hole at one end and the side body may include a connecting hole positioned to overlap the through hole at one end, and wherein the side frames and the side body may be connected together to the first body via the through hole and the connecting hole.

In an embodiment, the plurality of the battery cells may contact the first body.

In an embodiment, the battery assembly may further comprise a heat conductor positioned between the first body and the plurality of the battery cells.

A battery assembly according to another embodiment of the present disclosure may comprise a plurality of battery cells arranged in a stacked configuration; a first body forming a receiving space for receiving the plurality of the battery cells; a second body positioned to face the first body, forming the receiving space together with the first body, and spaced apart from the plurality of the battery cells; and a flow path formed between the plurality of the battery cells and the second body.

The embodiments of the present disclosure can provide a battery assembly with improved reliability by preventing the propagation of flame or gas to adjacent cells.

Furthermore, another advantage addressed by the embodiments of the present disclosure provides a battery assembly with improved stability by protecting the battery cells housed in the receiving space from external pressure or vibration.

Further, the embodiments of the present disclosure can provide a battery assembly that can reduce weight and reduce manufacturing costs.

### BRIEF DESCRIPTION OF THE DRAWINGS

FIG. 1 illustrates a battery assembly according to an embodiment of the present disclosure.
FIG. 2 illustrates a battery cell according to an embodiment of the present disclosure.
FIG. 3 illustrates a cell stack according to an embodiment of the present disclosure.
FIGS. 4 and 5 illustrate a battery assembly according to an embodiment of the present disclosure.
FIG. 6 illustrates a support frame and a side frame according to an embodiment of the present disclosure.
FIGS. 7 to 9 illustrate various embodiments of a support frame of the present disclosure.
FIGS. 10 to 12 illustrate a module stack according to an embodiment of the present disclosure.
FIG. 13 illustrates a battery assembly according to another embodiment of the present disclosure.
FIG. 14 illustrates a wall according to another embodiment of the present disclosure.
FIG. 15 illustrates a wall according to another embodiment of the present disclosure.

### DETAILED DESCRIPTION

Hereinafter, the embodiments of the present disclosure will be described in detail with reference to the accompanying drawings. However, these embodiments do not limit the present disclosure to the specific embodiments illustrated.

Certain terms used herein are for convenience of description only and are not intended to be limiting to the embodiments.

For example, expressions such as "identical" and "identical to" refer not only to a state of being strictly identical, but also to a state of being subject to tolerances, or differences in the degree to which the same function is obtained.

For example, expressions such as "in a direction," "along a direction," "parallel," "perpendicularly," "centered," "concentric," or "coaxial" that indicate a relative or absolute arrangement do not only strictly indicate such an arrangement, but also indicate a state of relative displacement by a tolerance, or by an angle or distance such that the same function is obtained.

For the purpose of describing the embodiments of the present disclosure, the following description is based on a spatial cartesian coordinate system with the X, Y, and Z axes orthogonal to each other. Each axial direction of the X, Y, and Z axis directions refers to both directions in which the respective axis extends.

The following references to the X-, Y-, and Z-directions are for the purpose of clarity of the present disclosure, although it is possible to define these directions differently depending on the reference.

The use of terms such as "first, second, third," and the like to precede components referred to herein is intended to avoid confusion as to the components to which they refer and is not intended to indicate any order, importance, or master-servant relationship among the components. For example, it is possible that an embodiment comprises only the second component without the first component.

As used herein, expressions in the singular include the plural unless the context clearly indicates otherwise.

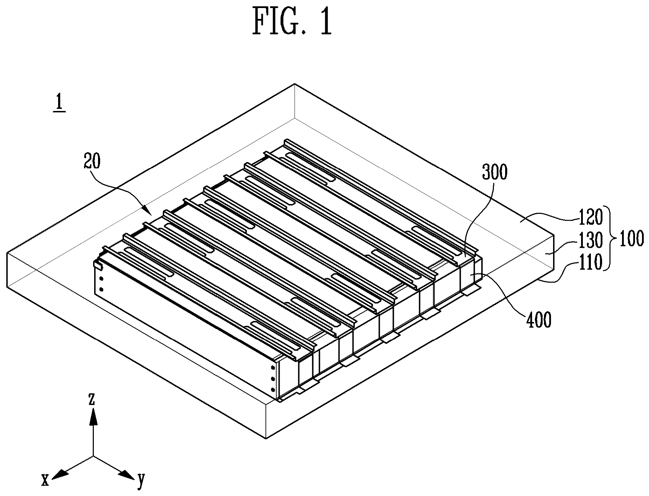

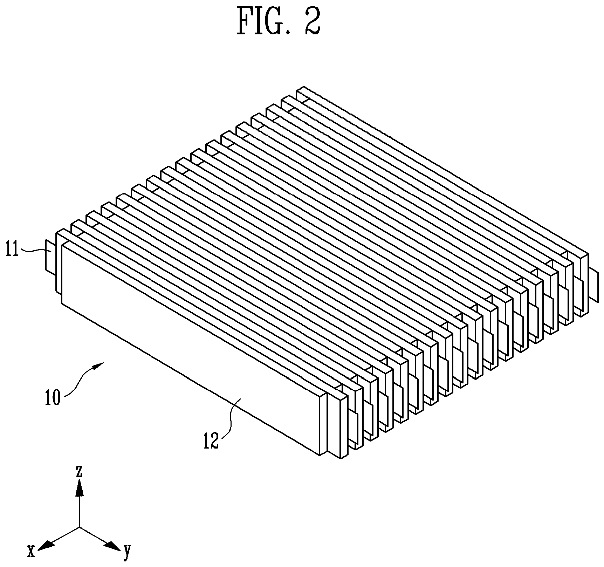

FIG. 1 illustrates a battery assembly according to an embodiment of the present disclosure, and FIG. 2 illustrates a battery cell according to an embodiment of the present disclosure.

A battery assembly 1 according to the present disclosure includes a plurality of battery cells 10. A battery cell 10 as described herein refers to a secondary battery that can be used repeatedly by charging and discharging electrical energy, for example, but not limited to a lithium secondary battery.

The battery cell 10 can be categorized as a pouch type secondary battery, a prismatic secondary battery, or a cylindrical secondary battery depending on its shape. For the sake of illustration, a pouch-type secondary battery is shown as an embodiment, but is not limited thereto.

On the other hand, the battery assembly 1 described herein may refer to a battery module or a battery pack. A battery module refers to a battery assembly 1 in which the battery cells 10 are grouped in one or more numbers to protect them from external shock, heat, vibration, etc. and to have high power and high capacity characteristics. A battery pack refers to a battery assembly 1 in which the battery cells 10 or battery modules 1 are grouped in one or more numbers.

The battery assembly 1 of the present disclosure refers to an assembly comprising a plurality of battery cells 10 in a receiving housing 100 to achieve a predetermined power output and capacity.

Referring to FIG. 1, the battery assembly 1 of the present disclosure includes a first body 110 forming a receiving space for receiving the plurality of the battery cells 10, a second body 120 positioned to face the first body 110 and forming the receiving space together with the first body 110.

The receiving housing 100 may include the first body 110 and the second body 120. The receiving housing 100 may form a receiving space therein. The receiving space may be formed on the first body 110. A plurality of battery cells 10 may be positioned in the receiving space formed on the first body 110. The first body 110 may be in the shape of a plate with a flat surface. This may improve the structural stability of the battery assembly 1.

The first body 110 may include a recess portion (not shown) formed in a recess. The recess portion may be connected to structures located on the first body 110. For example, the recess portion in the first body 110 may be connected to the side frames 400 described below through a threaded engagement.

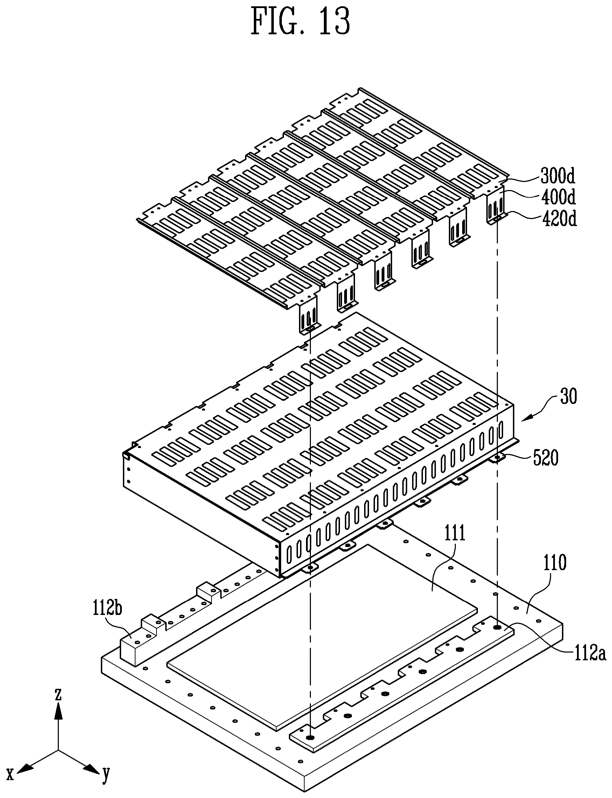

The first body 110 may include connecting portions 112a, 112b as shown in FIG. 13. The connecting portions 112a, 112b may be formed as a structure that protrudes from the first body 110 towards the receiving space. The connecting portions 112a, 112b may comprise recess portion for threaded engagement.

As a result, the first body 110 may form one side of the receiving space and may be connected to a structure located on the first body 110 via welding, bonding, brazing, adhesion, or fastening means, e.g., rivets, bolts, nuts.

Referring to FIG. 1, the second body 120 may be positioned to face the first body 110. A side of the first body 110 and a side of the second body 120 may be positioned to face each other. For example, referring to FIG. 1, a side of the first body 110 may be positioned to face upward along the Z-direction and a side of the second body 120 may be positioned to face downward along the Z-direction.

The second body 120 may cover a plurality of battery cells 10. The second body 120 may form one side of a receiving space. The first body 110 and the second body 120 may be positioned to be interposed between the plurality of the battery cells 10.

Referring to FIG. 1, the receiving housing 100 may include a third body 130. The third body 130 may connect the first body 110 and the second body 120. The third body 130 may be formed by extending from an edge of the first body 110 toward the receiving space. As a result, the receiving space may be formed by the first body 110, the second body 120, and the third body 130.

The first body 110, the second body 120, and the third body 130 may be made of an integrated piece. Without limitation, the first body 110 may be manufactured and then combined with the third body 130. Eventually, the first body 110 and the third body 130 may be connected to form a hexahedron having an open side. The open side may be covered by the second body 120. This allows a receiving space to be formed in the interior of the receiving housing 100.

The battery cell 10 includes an electrode assembly (not shown). The electrode assembly may include a positive electrode, a negative electrode, and a separator. The electrode assembly may be categorized as stacking, winding, stack-folding, or Z-stacking depending on how the positive electrode, negative electrode, and separator are stacked.

The battery cell 10 of the present disclosure may include electrode assemblies stacked in various ways, without limitation to any stacking method.

The positive electrode and negative electrode may include a collector. The positive electrode may include a positive electrode collector and the negative electrode may include a negative electrode collector. The collector may include a conductive material known in the art that does not cause a chemical reaction within the lithium secondary battery.

For example, the collector may include any of stainless steel, nickel, aluminum, titanium, copper, and alloys thereof, and may be provided in various forms, such as film, sheet, foil, and the like.

The positive electrode and negative electrode may include an active material. The positive electrode can include a positive electrode active material, and the negative electrode can include a negative electrode active material. The positive electrode active material may be a material into which lithium ions can be inserted and removed, and the negative electrode active material may be a material into which lithium ions can be adsorbed and removed. For example, the positive electrode active material can be a lithium metal oxide, and the negative electrode active material can be any of the following: crystalline carbon, amorphous carbon, carbon-based materials such as carbon composites, carbon fibers, lithium alloys, silicon, and tin.

The positive electrode and negative electrode may further include a binder and a coating material, respectively, for improved mechanical stability and electrical conductivity.

The separator can be configured to prevent an electrical short between the positive electrode and negative electrode and to allow the flow of ions to occur. The type of separator is not particularly limited, but may include a porous polymeric film. For example, the separator may comprise a porous polymeric film or a porous nonwoven fabric.

The electrolyte may include an electrolyte solution. The electrolyte may be a non-aqueous electrolyte. The electrolyte may include a lithium salt and an organic solvent. The electrolyte may further include an additive. The additive may form a film on the positive electrode or negative electrode through a chemical reaction inside the battery. For example, a positive electrode interfacial film may be formed on the positive electrode and a negative electrode interfacial film may be formed on the negative electrode.

Referring to FIG. 2, the battery cell 10 may further include a shell 12 that receives the electrode assembly therein. The electrode assembly and electrolyte solution can be accommodated within the shell 12. The shell 12 may comprise an outer insulating layer and an inner adhesive layer made of a polymer material, and a metal layer interposed between the outer insulating layer and the inner adhesive layer. The shell 12 may include a material with high mechanical rigidity to protect the battery cell 10 from external impact. For example, the shell may include an aluminum layer.

Referring to FIG. 2, the battery cell 10 may further include electrode leads 11 that protrude outside of the shell 12 for electrical connection to the outside. The electrode leads 11 may be associated with a positive and negative electrode of the battery cell 10, respectively. The electrode leads 11 may include a positive electrode tab in connection with the positive electrode and a negative electrode tab in connection with the negative electrode.

In the battery cell 10 according to the present disclosure, a width direction refers to a direction across the electrode leads 11 protruding in different directions. A height direction refers to a direction perpendicular to the width direction in the plane in which the electrode leads 11 are formed. A thickness direction refers to a direction perpendicular to the width direction and the height direction.

For example, referring to FIG. 2, the width direction of the battery cell 10 is the Y direction, the height direction is the Z direction, and the thickness direction is the X direction.

The battery cells 10 may be provided in multiples and may be stacked along one direction. This can increase the structural stability of the battery assembly 1 and improve the energy density. For example, referring to FIG. 2, the battery cells 10 may be stacked along the X direction. The direction in which the battery cell 10 is stacked may be defined as the stacking direction, and the stacking direction may be the same as the thickness direction of the battery cell 10.

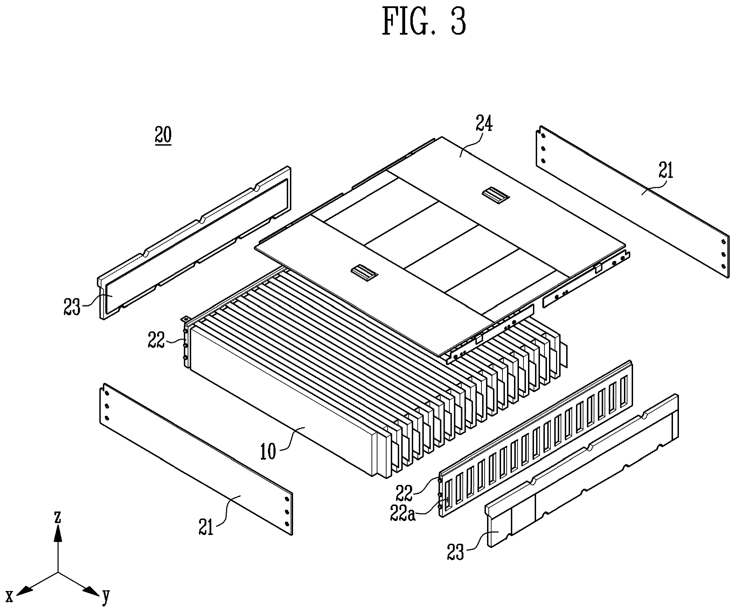

FIG. 3 illustrates a cell stack according to an embodiment of the present disclosure.

The cell stack 20 includes a plurality of battery cells 10. The cell stack 20 may further include a busbar 22 for electrically connecting the battery cells 10 to each other. The busbar 22 may connect the electrode leads 11 of the battery cells 10 to each other. The busbars 22 may be located at both ends of the battery cell 10.

In an embodiment, the busbar 22 may include slits 22a formed by openings. The electrode leads 11 of the battery cells 10 may be inserted into the slits, respectively. This allows the plurality of the battery cells 10 to be electrically connected to each other. The shape of the busbar 22 is not limited as long as the plurality of the battery cells 10 can be electrically connected.

The cell stack 20 may further include an insulating cover 23. The insulating cover 23 may allow the plurality of the battery cells 10 to be electrically isolated from the outside. This can prevent unintentional electrical connection of the cell stack 20. It may also allow for increased reliability of the battery cells. The insulating cover 23 may be provided on each of the outer sides of the busbars 22.

The cell stack 20 may further include endplates 21. The endplates 21 may increase the stiffness of the cell stack 20 to protect the cell stack 20 from external pressure, vibration, and shock. The endplates 21 may cover a plurality of battery cells 10.

The cell stack 20 may further include a sensing assembly 24. The sensing assembly 24 can sense and externally communicate electrical information, including voltage, current, etc. of the battery cells 10. This allows the battery cells 10 to be maintained in a stable state.

Referring to FIG. 3, the insulating cover 23, the end plate 21, and the sensing assembly 24 may cover the battery cells 10, i.e., the insulating cover 23, the end plate 21, and the sensing assembly 24 may each cover one side of a plurality of battery cells 10.

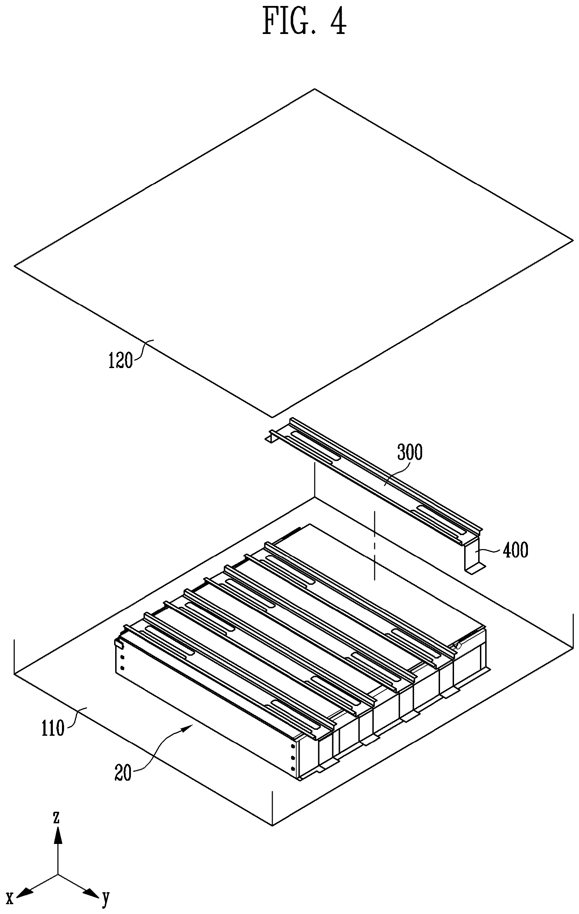

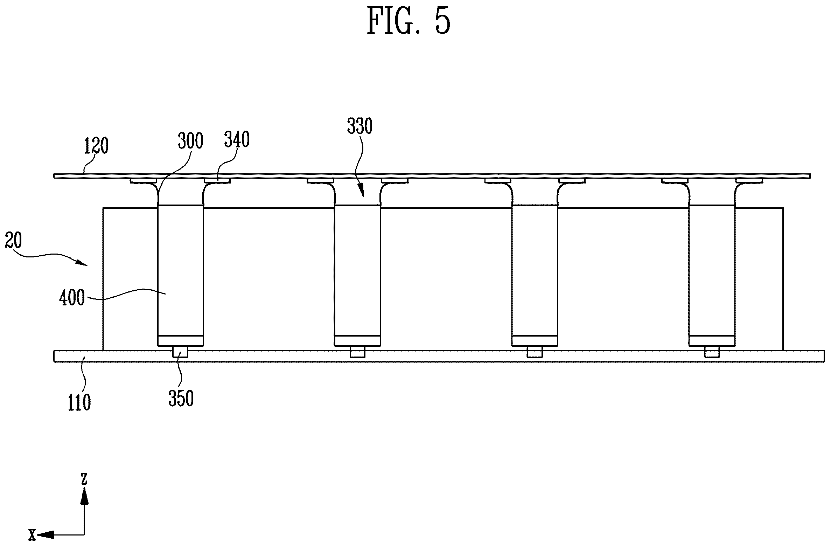

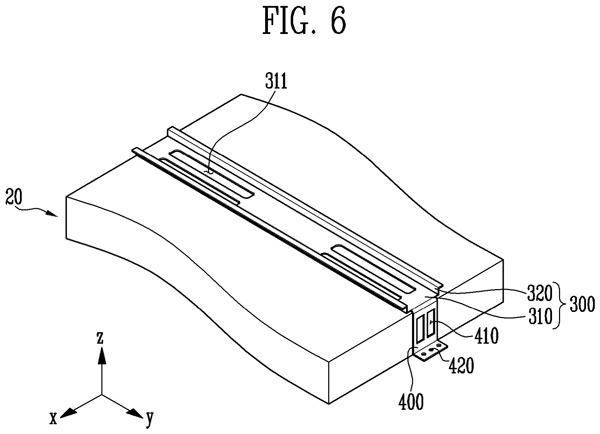

FIGS. 4 and 5 illustrate a battery assembly according to an embodiment of the present disclosure, and FIG. 6 illustrates a support frame and a side frame according to an embodiment of the present disclosure.

Referring to FIGS. 4 and 5, the battery assembly 1 of the present disclosure includes a flow path 330 formed between a plurality of battery cells 10 and a second body 120. The flow path 330 allows flames or gases generated by the battery cells 10 to travel through the flow path 330. The flow path 330 can form a path for the flame or gas to travel.

The flow path 330 may prevent flame or gas from one battery cell 10 from propagating to another adjacent battery cell 10. This may improve the stability of the battery assembly 1.

Referring to FIG. 4, the battery assembly 1 of the present disclosure includes a support frame 300. The support frame 300 may be positioned between the plurality of the battery cells 10 and the second body 120. The support frame 300 may be positioned between the plurality of the battery cells 10 and the second body 120 to support the second body 120.

The support frame 300 may cover at least a portion of the region of the plurality of the battery cells 10. A side surface of the support frame 300 may contact a region of the cell stack 20. Additionally, the support frame 300 may contact the second body 120. The support frame 300 may be positioned between the second body 120 and the cell stack 20. This allows gases or flames from any of the battery cells 10 to be moved in a predetermined direction through the flow path 330.

To this end, the support frame 300 may extend along a width direction of the plurality of the battery cells 10. This allows the flows 330 to extend along the width direction and prevents flames or gases from one battery cell 10 from propagating to adjacent battery cells 10.

The support frame 300 may be positioned between the plurality of the battery cells 10 and the second body 120 via any method known in the art. For example, an adhesive may be applied to one side surface of the support frame 300, and the adhesive may be secured to the second body 120.

The stacking direction in which the battery cells are stacked may be perpendicular to a direction in which the flow path extends. The stacking direction may be perpendicular to the width direction of the battery cell. The flow paths may be arranged parallel to the width direction of the battery cells. This allows flames or gases from one of the battery cells to travel to the upper flow path. This prevents the flame or gas from propagating to the other adjacent battery cells.

The battery assembly 1 of the present disclosure may further include side frames 400 extending from both ends of the support frame towards the first body. The side frames 400 may extend from both ends of the support frame 300 towards the first body 110. To this end, the length of the support frame 300 may be formed to be at least as long as the length of the battery cell 10 along the width direction of the battery cell 10.

The side frames 400 may cover the sides of the cell stack 20. For example, referring to FIGS. 4 and 5, the support frame 300 may cover one side of the cell stack 20 and the side frames 400 may cover another one side of the cell stack 20. The side frames 400 may be connected to the support frame 300 to form a "U" shape.

The side frames 400 may be connected to the first body 110. One end of the side frames 400 may be connected to the first body 110. The side frames 400 may be connected to the first body 110 and to each other by a welding, brazing, bonding, or fastening means.

The connection method is not particularly limited, as long as the side frames 400 and the first body 110 can be reliably connected. The side frames 400 may be integrally formed with the support frame 300, or may be manufactured separately and connected by a welding, bonding, or screwing.

This allows the support frame and side frames to be securely fastened to the first body.

For example, referring to FIG. 5, the battery assembly 1 of the present disclosure may further include a fastening portion 350. The fastening portion 350 may connect the side frames 400 and the first body 110. For this purpose, referring to FIG. 6, a through hole 420 may be formed in one end of the side frame 400. The fastening portion 350 may be formed with a bolt, and the bolt may be inserted into the through hole 420 to connect the side frames 400 with the first body 110.

As a result, the cell stack 20 may be stably secured to the first body 110 by the support frame 300 and the side frames 400. In addition, the phenomenon of the cell stack 20 being lifted away from the first body due to internal pressure can be prevented. Furthermore, even if the cell stack 20 leaves its preset position and moves toward the second body 120, the impact can be cushioned by the support frame 300.

The support frame 300 or side frames 400 may be formed of a metal or plastic material having high mechanical rigidity. For example, the support frame 300 or side frames 400 may be formed of engineering plastics. Engineering plastics exhibit good heat resistance and improved mechanical stiffness. This allows the support frame 300 and side frames 400 to safely protect the cell stack 20 in high temperature and high pressure environments.

The support frame 300 and side frames 400 may be provided in a plurality. The support frame 300 and side frames 400 may cover a region of the cell stack 20 along the thickness direction of the battery cell 10. For example, referring to FIG. 4, the support frame 300 and side frames 400 may be disposed at predetermined intervals along the X direction on an outer surface of the cell stack 20.

The support frame 300 and side frames 400 may be provided in a plurality to form a plurality of flow passages 330, such that flame or gas may travel through each flow passage 330.

Furthermore, the simple shape of the support frame 300 and the side frames 400 may reduce manufacturing costs and improve production efficiency. When manufacturing any structure including a plurality of support frames and a plurality of side frames, the molding process can be complex and difficult, and the manufacturing cost can increase. In contrast, the battery assembly 1 of the present disclosure can be manufactured by manufacturing a support frame 300 and side frames 400, respectively, and disposing them on the outer side of the cell stack, which simplifies the manufacturing process and reduces the manufacturing cost.

The battery assembly 1 of the present disclosure may include a preset number of support frames 300 and side frames 400, depending on the user's preferences in consideration of energy density and mechanical stiffness.

Referring to FIG. 6, the support frame 300 may include a bottom portion 310 and an extension portion 320. The bottom portion 310 may be formed parallel to the first body 110. The extension portion 320 may extend from both ends of the bottom portion 310 toward the first body or the second body 120.

In an embodiment, referring to FIG. 6, the bottom portion 310 can press against the cell stack 20. To do so, the bottom portion 310 may contact at least one side of the cell stack 20. The bottom portion 310 may extend along a width direction of the battery cell 10, in contact with at least one side of the cell stack 20. The bottom portion 310 may be formed such that the length along the width direction of the battery cell 10 is at least as long as the length along the thickness direction of the battery cell 10. At both ends of the bottom portion 310, side frames 400 may extend toward the first body 110. This allows the bottom portion 310 to press the cell stack 20 toward the first body 110, preventing the cell stack 20 from lifting.

The extension portion 320 may extend from both ends of the bottom portion 310 toward the second body 120 as shown in FIG. 6. Referring to FIG. 4, the extension portion 320 may extend along the Z direction from the bottom portion 310. The cell stack 20 and the second body 120 may be spaced apart by the extension portion 320 to form a space. In the space formed, a flow path 330 may be formed to allow gas or flame to travel.

The extension portion 320 may contact the second body 120. This prevents flame or gas from propagating from one of the plurality of flows 330 to another of the plurality of flows 330.

The extension portion 320 may be bent at one end to form parallel to the second body 120. This reduces the impact that the extension portion 320 receives. The area of the extension portion 320 in contact with the second body 120 can be increased to reduce pressure.

In other embodiments, the cross-section of the flow path 330 may form a closed curve, i.e., the extension portion 320 extending from both ends of the bottom portion 310 may be connected to each other. This allows gases located in the flow path to be efficiently vented.

In another embodiment, the extension portion 320 may extend from the bottom portion 310 toward the first body. The extension portion 320 and the bottom portion 310 may be connected to form a "U" shape with an opening toward the first body 110. At this point, one end of the extension portion 320 may be bent to form a line with the first body. This allows the support frame to be stably positioned on top of the plurality of the battery cells and allows gases from the battery cells 10 to move efficiently through the flow path.

The support frame 300 may further include a cushioning member 340 as shown in FIG. 5. The cushioning member 340 may be located at one end of the extension portion 320. In an embodiment, the cushioning member 340 may be provided at a free end of the extension portion 320. The portion of both ends of the extension portion 320 extending from the bottom portion 310 refers to the fixed end of the extension portion 320. The free end of the extension portion 320 refers to a region located opposite to the fixed end of the extension portion 320.

For example, referring to FIG. 5, the free end of the extension portion 320 refers to the end where the extension portion 320 faces the second body 120. The impact that the extension portion 320 receives from the second body 120 may be minimized by the cushioning member 340.

In another embodiment, when the extension portion 320 and the bottom portion 310 are connected to form a "U" shape with an opening toward the first body 110, the free end of the extension portion 320 is the end of the extension portion 320 facing the first body 110. This allows the impact between the extension portion 320 and the plurality of the battery cells 10 to be minimized.

The material of the cushioning member 340 is not particularly limited, as long as the impact can be minimized. For example, the cushioning member 340 may include a material of at least one of rubber, foam plastic, and the like.

Referring to FIG. 6, the bottom portion 310 may further include a bottom hole 311 which is in communication with the flow path 330. The bottom hole 311 may allow flames or gases generated in the cell stack 20 to propagate into the flow path 330. The bottom hole 311 may be provided in plurality.

The side frame 400 may further include side holes 410 that are penetrated and formed. The side holes 410 may be formed by penetrating a region of the side frame 400. The side holes 410 may allow flames or gases from the cell stack 20 to escape into the receiving space.

The flow path 330 may be formed as a channel. The flow path 330 may be formed as a channel extending in the width direction of the battery cell. For example, referring to FIG. 6, the channel may extend along the Y direction. The channel 330 may be open at both ends to allow flames and gases to escape. This allows flames and gases generated in the cell stack 20 to be vented to the outside.

In other embodiments, the cross-section of the flow path 330 may be formed as a closed curve.

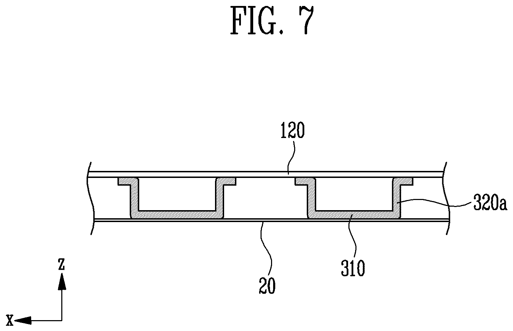

FIGS. 7 to 9 illustrate various embodiments of the support frame of the present disclosure. The flow path 330 may be formed by the bottom portion 310, the extension portion 320, and the second body 120. The bottom portion 310 may form the bottom surface of the flow path 330. The extension portion 320 may form the side of the flow path 330.

The extension portion 320 may extend to form an incline with the bottom portion 310. The extension portion 320 may have a predetermined curvature and may extend from the bottom portion 310 toward the second body 120. This may improve the structural stability of the support frame 300 located between the cell stack 20 and the second body 120.

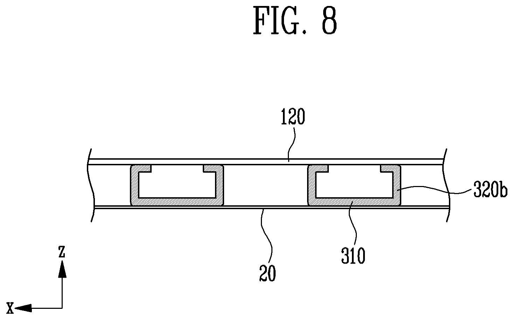

Referring to FIG. 7, the extension portion 320a may extend perpendicular to the bottom portion 310. Additionally, an end of the extension portion 320a may be bent toward an outward side of the flow path 330. Referring to FIG. 8, the extension portion 320b may form an incline with the bottom portion 310. An end of the extension portion 320b may be bent toward the inward side of the flow path 330. This may minimize the impact that the extension portion 320 receives.

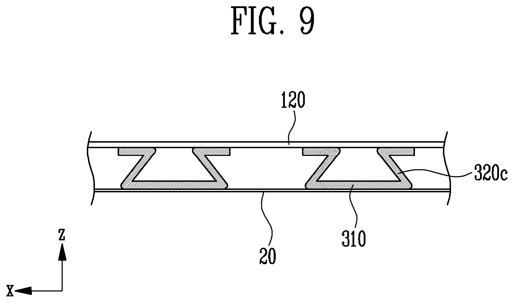

Referring to FIG. 9, the extension portion 320c may extend to form an incline with the bottom portion 310. While the cell stack 20 and the second body 120 may remain spaced apart, the incline may minimize the flow path 330 space. This allows the volume of the battery assembly 1 to be reduced for improving the energy density. Additionally, the inclined structure may prevent damage to the extension portion 320, even if the impact received by the extension portion 320 is increased.

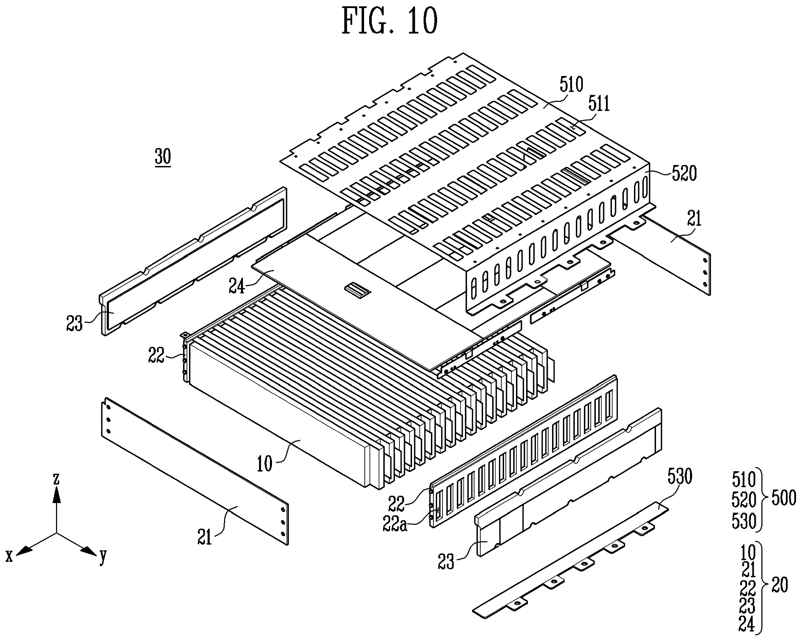

FIGS. 10 to 12 illustrate a module stack according to an embodiment of the present disclosure.

The module stack 30 may include the cell stack 20 and a module cover 500. The module cover 500 can receive a plurality of battery cells 10. The module cover 500 may receive the cell stack 20 therein. The module cover 500 may form a receiving space to receive the cell stack 20 therein. The module cover 500 may protect the cell stack 20 from external impact. The module cover 500 may be coupled to the first body 110 to secure the position of the cell stack 20.

As a result, the module cover 500 may cover the cell stack 20 positioned on the first body 110 and protect the cell stack 20. The support frame 300 may be positioned between the module cover 500 and the second body 120. This allows the module cover 500 and the second body 120 to be spaced apart to form the flow path 330.

Referring to FIG. 10, the module cover 500 may include a cover body 510 and a side body 520.

The cover body 510 may cover a plurality of battery cells 10. The cover body 510 may cover at least one side of the cell stack 20. The cover body 510 may include a cover hole 511 formed through the cover body 510. The cover holes 511 allow flames or gases from the cell stack 20 to travel to the flow path 330. The cover body 510 can be positioned between the cell stack 20 and the second body 120.

Side body 520 may extend from both ends of the cover body 510 toward the first body 110. The side body 520 may extend downwardly from both edges of the cover body 510 parallel to the thickness direction of the battery cell 10.

The side body 520 may be coupled to the first body 110. The method of coupling is not particularly limited, as long as the side body 520 can be reliably coupled. For example, the side body 520 may be coupled to the first body 110 by welding, bonding, or screwing.

The side body 520 may be bent at one end so that a portion of it is arranged parallel to the first body 110. This is to cushion the impact of the side body 520. For example, the side body 520 may be flanged at one end.

The side body 520 may press against the first body 110. In this case, the contact area of the side body 520 can be increased to reduce impact.

Referring to FIG. 10, the module cover 500 may further include a low cover 530. The low cover 530 may be positioned on the first body 110. The low cover 530 may be coupled to the side body 520. The low cover 530 may define a space where the cell stack 20 is positioned on the first body 110.

The low cover 530 may extend along a thickness direction of the battery cells 10 on the first body 110. The low cover 530 may be provided on each of the two edges of the cell stack 20. The low cover 530 may extend from the first body 110 and may have one end bent.

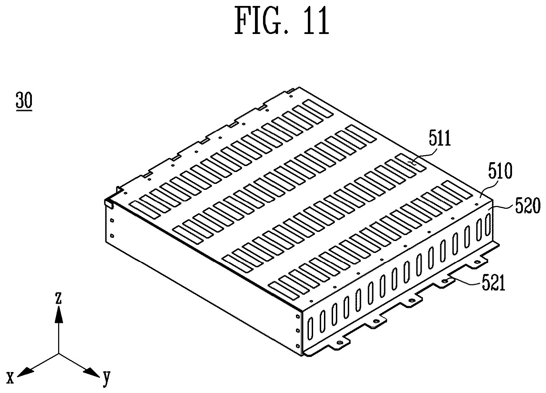

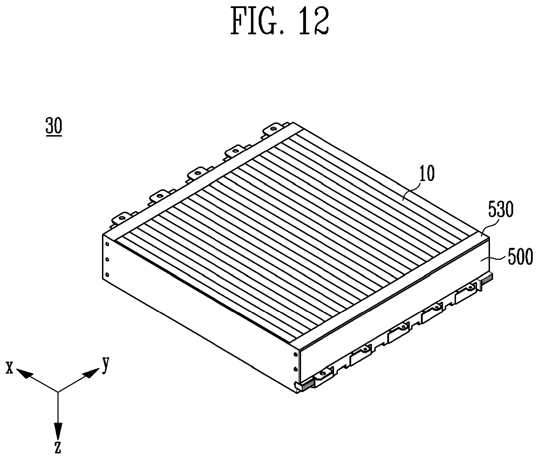

Referring to FIG. 11, the module cover 500 may cover an exterior surface of the cell stack 20. Referring to FIG. 12, at least one side of the module cover 500 may be opened. For example, a low side of the module cover 500 may be opened. This allows the first body 110 and the cell stack 20 to be in contact. A plurality of battery cells 10 may contact the first body 110. This structure allows the battery assembly 1 to be lightweight and maximize cooling.

FIG. 13 illustrates a battery assembly according to another embodiment of the present disclosure.

A module stack 30 may be positioned on a first body 110. The first body 110 may be a cooling plate. The first body 110 may include cooling channels (not shown) within which a coolant is movable. This allows the first body 110 to cool the module stack 30.

The battery assembly 1 of the present disclosure may further include a heat conductor 111 positioned between the first body 110 and the plurality of the battery cells 10. The heat conductor 111 may be applied to the first body 110 or may be in the form of a thin sheet to be bonded to the first body 110. For example, the heat conductor may include silicone. The heat conductor 111 is not particularly limited in type, as long as it can efficiently transfer heat between the first body 110 and the plurality of the battery cells 10.

As a result, the cell stack 20 may be covered by the module cover 500, the support frame 300d, and the side frames 400d. The module cover 500 may primarily cover the cell stack 20. The support frame 300d may cover the cover body 510 of the module cover 500, and the side body 520 of the module cover 500 may be covered by the side frame 400d.

Referring to FIG. 11, the side body 520 may include a connecting hole 521. The connecting hole 521 may be formed through the side body 520. By the connecting hole 521, the side body 520 may be connected to the first body 110. As described above, the side frame 400d may include a through hole 420d. A connecting hole 521 may be positioned to overlap the through hole 420d.

Referring to FIG. 13, the side frame 400d and the side body 520 may be connected together to the first body 110 via the through hole 420d and the connecting hole 521. This may prevent lifting of the cell stack 20, and may improve the structural stability of the battery assembly 1.

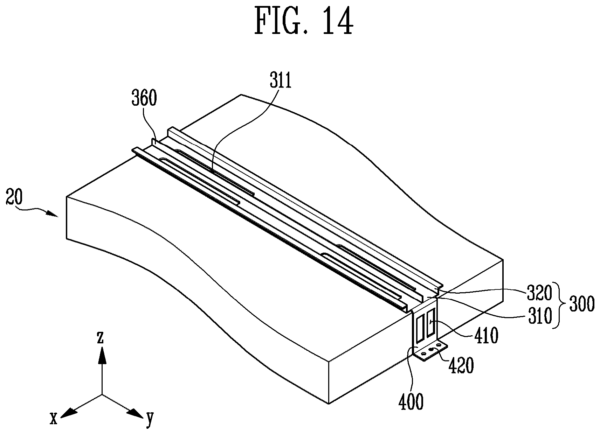

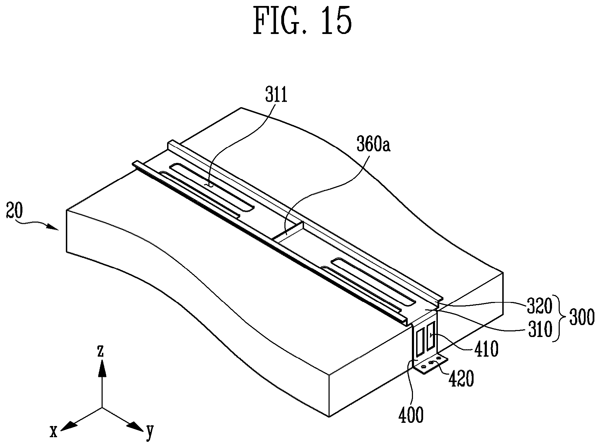

FIG. 14 illustrates a wall according to another embodiment of the present disclosure, and FIG. 15 illustrates a wall according to another embodiment of the present disclosure.

The support frame 300 of the present disclosure may further include walls 360, 360a.

The wall 360 extends from the bottom portion 310 toward the first body or second body and may be positioned between the extension portion 320. The wall 360 may be damaged or deformed due to the pressure of the flame or gas discharged toward the bottom hole 311. For example, the wall 360 may be bent upward or otherwise distorted in shape. This can affect adjacent cells and degrade the performance of the battery cell.

By forming the wall 360 on the bottom portion 310, damage to the support frame 300 may be prevented. The wall 360 may extend from the bottom portion 310 toward the first body or the second body, i.e., the wall 360 may be formed by protruding or extending from the bottom portion 310 towards the Z direction. This configuration may minimize deformation of the support frame 300 even when high pressure is applied to the support frame 300 in a direction parallel to the Z direction.

The wall 360 may be welded or screwed to the bottom portion 310, but the method of coupling is not particularly limited.

The wall 360 may be formed along one direction in which the flow path 330 is formed. Referring to FIG. 14, the flow path 330 may extend along the Y direction. For example, the wall 360 may be formed between the extension portion 320 along a direction parallel to each of the extension portions 320.

Additionally, the wall 360 can be formed along a direction different from the one direction to block the path of the flow path 330. For example, the wall 360 may be formed along a direction perpendicular to the one direction. Referring to FIG. 15, the wall 360a may be formed along the X direction to block the path of flow path 330.

The wall 360a may be formed between one end and the other end of the flow path 330. It may be preferred that the wall 360a is formed midway between the one end and the other end of the flow path 330. This allows the wall 360a to divide the flow path 330 into two regions, i.e., the wall 360a can block the transfer of gas or flame between the two regions.

Both ends of the wall 360a may contact the extension portions 320, respectively. When the wall 360a is formed in a direction different from the one direction, both ends may contact the extension portion 320 to completely block the flow of fluid via the flow path 330. Referring to FIG. 15, the wall 360a is formed perpendicular to the direction in which the flow path 330 extends between the extension portion 320, and the wall 360 may contact each of the extension portion 320. This may allow the flow of fluid via the flow path 330 to be blocked.

The embodiments of the present disclosure may be practiced in various variations and are not limited to the embodiments described above. Accordingly, variations should be considered to fall within the scope of the present disclosure if they include components of the embodiments of the present disclosure.

## Claims

1. A battery assembly comprising:
a plurality of battery cells arranged in a stacked configuration;
a first body forming a receiving space for receiving the plurality of battery cells;
a second body positioned to face the first body and forming the receiving space together with the first body; and
a support frame including a flow path extending in one direction and positioned between the plurality of battery cells and the second body.

2. The battery assembly according to claim 1, wherein the support frame includes a bottom portion formed parallel to the first body, and an extension portion extending from both ends of the bottom portion toward the first body or the second body.

3. The battery assembly according to claim 2, wherein the extension portion is bent at one end and is parallel to the first body or the second body.

4. The battery assembly according to claim 2, wherein the extension portion extends to form an incline with the bottom portion.

5. The battery assembly according to claim 2, wherein the flow path is formed in a channel shape.

6. The battery assembly according to claim 2, wherein the support frame further includes a cushioning member positioned at one end of the extension portion.

7. The battery assembly according to claim 2, wherein the extension portion is in contact with the second body.

8. The battery assembly according to claim 2, wherein the bottom portion further includes a bottom hole in communication with the flow path.

9. The battery assembly according to claim 1, further comprising:
side frames extending from both ends of the support frame toward the first body.

10. The battery assembly according to claim 9, wherein one end of the side frames is connected to the first body.

11. The battery assembly according to claim 9, wherein the side frames further includes a side hole formed in through.

12. The battery assembly according to claim 1, wherein a stacking direction in which the plurality of battery cells are stacked is perpendicular to a direction in which the flow path extends.

13. The battery assembly according to claim 1, further comprising:
a module cover positioned inside the receiving space and receiving the plurality of battery cells;
wherein the support frame is positioned between the module cover and the second body.

14. The battery assembly according to claim 13, wherein the module cover includes a cover body covering the plurality of battery cells and including a cover hole formed in through, and a side body extending from both ends of the cover body toward the first body.

15. The battery assembly according to claim 14, wherein the side body is coupled with the first body.

16. The battery assembly according to claim 14, wherein the side body is bent at one end and is arranged parallel to the first body.

17. The battery assembly according to claim 16, further comprising:
side frames extending from both ends of the support frame toward the first body,
wherein the side frames include a through hole at one end and the side body includes a connecting hole positioned to overlap the through hole at one end, and
wherein the side frames and the side body are connected together to the first body via the through hole and the connecting hole.

18. The battery assembly according to claim 1, wherein the plurality of battery cells are in contact with the first body.

19. The battery assembly according to claim 1, further comprising:
a heat conductor positioned between the first body and the plurality of battery cells.

20. A battery assembly comprising:
a plurality of battery cells arranged in stacked;
a first body forming a receiving space for receiving the plurality of battery cells;
a second body positioned to face the first body, forming the receiving space together with the first body, and spaced apart from the plurality of battery cells; and
a flow path formed between the plurality of battery cells and the second body.

21. The battery assembly according to claim 2, wherein the support frame further includes a wall extending from the bottom portion toward the first body or the second body and positioned between the extension portion.

22. The battery assembly according to claim 21, wherein the wall is formed along the one direction.

23. The battery assembly according to claim 21, wherein the wall is formed along a direction different from the one direction to block a path of the flow path.

24. The battery assembly according to claim 23, wherein the both ends of the wall are in contact with the extension portion, respectively.
